# EUROPÄISCHE PATENTSCHRIFT

(11) **EP 1 014 173 B1**
(45) Veröffentlichungstag und Bekanntmachung des Hinweises auf die Patenterteilung: **31.05.2006**
(21) Anmeldenummer: 99124787.5
(22) Anmeldetag: 14.12.1999
(51) Int. Cl.: G03B 42/02

(54) **Vorrichtung zum Auslesen von Informationen aus Speicherfolien**
Device for reading informations from stimulable phosphor sheets
Dispositif pour lire de l'information des feuilles en phosphore stimulable

(30) Priorität: 24.12.1998 DE 19860247
(43) Veröffentlichungstag der Anmeldung: 28.06.2000
(73) Patentinhaber: Agfa-Gevaert HealthCare GmbH, 51373 Leverkusen (DE)
(72) Erfinder: Müller, Jürgen, 81545 München (DE)

(56) Entgegenhaltungen:
- EP-A- 0 345 832
- US-A- 4 754 144
- US-A- 4 786 807
- US-A- 4 857 732
- US-A- 5 265 865

## Beschreibung

Die Erfindung geht aus von einer Vorrichtung zum Auslesen von Informationen aus Speicherfolien nach dem Oberbegriff von Anspruch 1.

In der US-PS 5,665,976 ist eine Vorrichtung gezeigt, mit der stimulierbare Phosphorfolien ausgelesen und gelöscht werden können. Hierzu werden die Folien zuerst durch einen Scanner und im Anschluß durch eine Löschstation transportiert. In der Löschstation wird die Folie mit Licht einer bestimmten Wellenlänge beaufschlagt, die den Scanvorgang nicht stört. Hat die Folie die Löschstation passiert, wird die Transportrichtung umgekehrt und die Folie ein zweites Mal durch die Löschstation bewegt. Bei diesem zweiten Löschvorgang kann Licht einer anderen Wellenlänge benutzt werden, da zu diesem Zeitpunkt der Scanvorgang bereits abgeschlossen ist.

Um die aus der Kassette entnommene Folie scannen zu können, muß diese Folie zuerst entweder zentriert oder zumindest in eine definierte Lage gebracht werden. Für diesen Vorgang wird Platz benötigt. Üblicherweise wird die Folie der Kassette entnommen, dann ausgerichtet und danach dem Scanner zugeführt, so daß Scanner und Kassette etwa um eine Folienlänge voneinander beabstandet sind. Erst eine exakt ausgerichtete Folie kann auch entsprechend exakt abgetastet werden.

Ein Scanner zum Abtasten von Speicherfolien weist üblicherweise einen sehr schmalen Scanspalt auf, wobei in geringem Abstand vor und hinter dem Scanspalt jeweils ein Transportwalzenpaar angeordnet ist. Nur so kann eine gleichförmige Geschwindigkeit der Folie durch den Scanspalt gewährleistet werden. Von dem Walzenpaar nach dem Scanner läuft die Folie in der Vorrichtung nach der US-PS.5,665,976 dann in die Löscheinrichtung. Es ist ganz klar ersichtlich, daß nach der Löscheinrichtung noch ein weiteres Walzenpaar vorhanden sein muß, welches die Folie übernimmt, so daß auch das hintere Ende der Folie durch die Löscheinrichtung gezogen werden kann. Es sind folglich bei der in der US-PS 5,665,976 gezeigten Anordnung wenigstens drei Walzenpaare notwendig, mit denen die Folie nach Entnahme aus der Kassette in Kontakt kommt.

Durch das Vorhandensein von wenigstens drei Transportwalzenpaaren und dem notwendigen Abstand zwischen Kassette und Scanvorrichtung weisen diese herkömmlichen Vorrichtungen sehr lange Transportwege für die Speicherfolien auf. Um trotzdem kompakte Gehäuseformen realisieren zu können, wurden die Transportstrecken gefaltet, so daß enge Krümmungsradien unumgänglich waren.

Aus der US 5,265,865 ist eine Vorrichtung bekannt, bei welcher die Kassettenaufnahme, die Läscheinheit und der Scanner so augeordnet sind, dass die Löscheinheit zwischen Kassettenaufnahme und Scanner liegt. Ein Schonender Umgang mit den auszutesender Speicherfolien ist bei dieser Vorrichtung in nicht cellen Phasen eines gesauten Bearbeitungs Zyklus gewährteistet.

Es war die Aufgabe der Erfindung, eine Vorrichtung zum Auslesen von Informationen aus Speicherfolien so auszugestalten, daß ein möglichst schonender Umgang mit den Speicherfolien gewährleistet ist. Enge Radien in den Transportstrecken und eine große Anzahl von Transportwalzenpaaren sollten also tunlichst vermieden werden.

Absatz Gelöst wird die Aufgabe durch eine Vorrichtung mit den Merkmalen von Anspruch 1. Durch die Anordnung der Löscheinheit zwischen dem Scanner und der Kassettenaufnahme kommt die Vorrichtung mit nur zwei Transportwalzenpaaren aus. Der Abrieb an den Speicherfolien kann deshalb sehr gering gehalten werden. Auch kann der Abschnitt der Transportstrecke, der für das Löschen der Speicherfolien vorgesehen ist, gleichzeitig zum Ausrichten verwendet werden. Es ist daher durch diese Anordnung eine äußerst kompakte Bauweise mit sehr kurzer Transportstrecke möglich.

Die Transportwalzenpaare sind vor und hinter dem Scanspalt vorgesehen. Für den Auslesevorgang wird die Speicherfolie aus der Kassette durch eine Übergabeeinrichtung entnommen, durch die nicht aktivierte Löscheinheit geführt und mit den Transportwalzenpaaren durch den Scanner gefördert, bis die Speicherfolie nur noch von dem Transportwalzenpaar hinter dem Scanspalt gehalten wird.

Gelöscht wird die Folie während des Rücktransports in entgegengesetzter Richtung. Die Transportgeschwindigkeit während des Löschvorganges ist höher als während des Scanvorganges.

Die Kassettenaufnahme, die Löscheinheit und der Scanner sind senkrecht übereinander angeordnet. Die Kassettenaufnahme ist so ausgerichtet, daß die Speicherfolie nach unten aus der Kassette entnommen und mit dem vorderen Bereich direkt dem Transportwalzenpaar oberhalb des Scanspaltes zugeführt werden kann. Die Speicherfolien können dadurch praktisch ohne Richtungsänderung über die gesamte Transportstrecke von der Kassette durch die Löscheinrichtung und den Scanner geführt werden.

Der Scanvorgang kann aufgrund dieser vorteilhaften Anordnung bereits begonnen werden, während sich ein Teil der Speicherfolie noch in der Kassette befindet. Ebenso endet der Löschvorgang während des Rücktransports erst, wenn sich ein Großteil der Speicherfolie bereits wieder in der Kassette befindet.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigen:
- Fig. 1: die schematische Darstellung einer erfindungsgemäßen Vorrichtung und
- Fig. 2: eine Einrichtung zum Zentrieren und Ausrichten der Folie im Scanner.

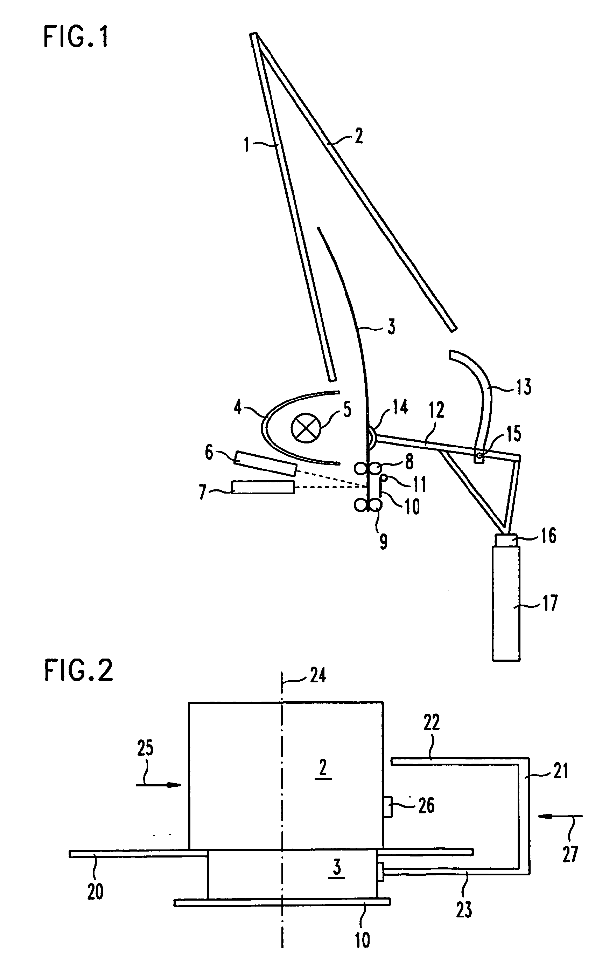

Eine Kassette zur Aufnahme einer Speicherfolie 3 besteht aus einem Bodenteil 1 und einem schwenkbar daran befestigten Deckelteil 2. Die Kassettenaufnahme 20 ist aus Übersichtlichkeitsgründen nur in Fig. 2 schematisch angedeutet. Sie weist eine Halte- und Transportvorrichtung für die Kassette 1, 2 auf, welche die Kassette in Richtung des Pfeiles 25 bis zu dem Anschlag 26 fördert.

Unterhalb der Kassettenaufnahme befindet sich eine Löscheinrichtung mit einer Löschlampe 5 und einem Reflektor 4. In Transportrichtung der Speicherfolie unterhalb der Löscheinrichtung schließen sich zwei Transportwalzenpaare 8 und 9 an, die beide in eine offene und eine geschlossene Stellung verfahren werden können. Eine Auflageleiste 10 für die Speicherfolie ist um den Drehpunkt 11 zweischen die Transportwalzenpaare 8 und 9 einschwenkbar.

Der Scanner 6, 7 liest die gespeicherten Informationen zwischen den Transportwalzenpaaren 8 und 9 aus. Eine Laserlichtquelle 6 regt hierzu die Speicherfolie punktweise zum Leuchten an, während die Leseeinrichtung 7 die leuchtenden Punkte erkennt und die gemessenen Werte an eine hier nicht gezeigte Bildverarbeitungseinrichtung weiterleitet.

Um die Speicherfolie 3 aus der Kassette 1, 2 zu entnehmen und in den Spalt des ersten Transportwalzenpaares 8 zu überführen, ist ein Sauger 14 vorgesehen, der an einem Gestänge 12 befestigt ist. Dieses Gestänge ist über einen Flansch 15 in einer Kulisse 13 verschiebbar. Die Verschiebung erfolgt über den Pneumatikzylinder 17 mit dem Kolben 16, der an dem Gestänge befestigt ist.

Die Einrichtung zum Zentrieren der Kassette 1, 2 und der Speicherfolie 3 (Fig. 2) weist einen Schieber 21 auf, der zwei unterschiedlich lange Schenkel 22 und 23 besitzt. Die Länge der beiden Schenkel ist so abgestimmt, daß dann, wenn Schenkel 22 an der Kassette 1, 2 und Schenkel 23 an der Speicherfolie 3 anliegen, diese Speicherfolie zur Kassette zentriert ausgerichtet ist und somit die vertikalen Mittellinien von Speicherfolie und Kassette in Deckung sind.

Wird nun eine Kassette mit einer zum Auslesen bestimmten Speicherfolie der Vorrichtung zugeführt, so wird die Kassette in Richtung des Pfeiles 25 gefördert, bis sie an dem Anschlag 26 anstößt. Der Anschlag ist so angebracht, daß die Kassette mit ihrer vertikalen Mittellinie über die Mittellinie 24 des Scanners hinausgeschoben ist. Auch die mit seitlichem Spiel in der Kassette liegende Speicherfolie 3 befindet sich bei dieser Kassettenlage in jedem Fall mit ihrer vertikalen Mittellinie rechts von der Mittellinie 24 des Scanners (s. Fig. 2). Die Kassette wird nun durch einen hier nicht gezeigten aber an und für sich bekannten Mechanismus geöffnet. Als Beispiel sei hier das Herunterdrücken der Kassette auf zwei Öffnungsdorne genannt, die dann den Schließmechanismus der Kassette betätigten.

Nun wird der Kolben 16 des Pneumatikzylinders 17 ausgefahren, so daß sich der Flansch 15 in der Kulisse 13 nach oben bewegt. In seiner oberen Endstellung wird der Sauger 14 an dem Gestänge 12 auf die Speicherfolie 3 gedrückt und über eine entsprechende Einrichtung ein Vakuum aufgebaut. Daraufhin bewegt sich der Sauger 14 über den Pneumatikantrieb 16, 17 in seine untere Endstelzurück. Das Transportwalzenpaar 8 ist in seine offene Stellung verfahren und die Leiste 10 eingeschwenkt, so daß die Vorderkante der Speicherfolie 3 auf dieser Leiste zu liegen kommt. Die nun von dem Sauger 14 abgelegte Speicherfolie ist damit auf der Leiste 10 seitlich frei verschiebbar.

Nun wird der Schieber 21 in Richtung des Pfeiles 27 bewegt und sowohl Kassette als auch Speicherfolie so weit verschoben, bis sich die vertikalen Mittellinien von Speicherfolie und Kassette mit der Mittellinie 24 des Scanners decken. Damit ist die Folie zum Scanner zentriert positioniert. Nun wird das Transportwalzenpaar 8 geschlossen und die Leiste 10 ausgeschwenkt. Der Scanvorgang startet, in dem das Transportwalzenpaar 8 beginnt, die Speicherfolie in den offenen Spalt des Transportwalzenpaares 9 zu fördern. Während sich nun langsam das Transportwalzenpaar 9 in seine geschlossene Stellung bewegt, wird ebenso langsam das Transportwalzenpaar 8 geöffnet, so daß die Speicherfolie 3 praktisch nur immer durch ein Transportwalzenpaar gefördert wird. Der Übergang von dem Eingriff des Transportwalzenpaares 8 auf das Transportwalzenpaar 9 erfolgt ruckfrei.

Die gesamte Speicherfolie 3 wird auf diese Weise durch den Scanner gefördert, ohne daß ein weiteres Transportwalzenpaar notwendig wäre. Am Ende des Scanvorgangs stoppt das Transportwalzenpaar 9 und hält den hinteren Rand der Speicherfolie 3 fest. Nun wird die Löschlampe 5 eingeschaltet und das Transportwalzenpaar 9 fördert die Speicherfolie in entgegengesetzter Richtung mit erhöhter Geschwindigkeit in die Kassette zurück. Auch bei diesem Rücktransport bei aktivierter Löscheinrichtung wird, wie vorher beschrieben, die Transportfunktion wieder von dem einen auf das andere Transportwalzenpaar übergeben. Während also das Transportwalzenpaar 8 in die geschlossene Stellung bewegt wird, öffnet sich langsam das Transportwalzenpaar 9.

Befindet sich nur noch der vordere Rand der Speicherfolie zwischen dem Transportwalzenpaar 8, so wird dieses angehalten, die Leiste 10 wieder eingeschwenkt und die Transportwalzen in die geöffnete Stellung verfahren.

Über hier nicht gezeigte Sensoren kann nun festgestellt werden, ob die Folie 3 sich noch in einer zur Kassette zentrierten Lage befindet. Alternativ ist es jedoch auch möglich, den Schieber 21 ein zweites Mal in Richtung des Pfeiles 26 zu betätigen, so daß sowohl Kassette als auch Folie um eine geringe Distanz verschoben werden. Dabei wird die Folie dann wieder in die richtige Lage zur Kassette gebracht.

Nun wird wieder der Sauger 14 aktiviert, der die Speicherfolie 3 aus dem geöffneten Spalt des Transportwalzenpaares 8 entnimmt und in der Kassette 1, 2 ablegt. Der Deckel 2 wird daraufhin geschlossen und die Kassette entgegen der Richtung des Pfeiles 25 zur Ausgabe gefördert.

## Patentansprüche

1. Vorrichtung zum Auslesen von Informationen aus Speicherfolien (3), die in einer Kassette (1,2) der Vorrichtung zugeführt werden, mit einer Kassettenaufnahme (20), Mitteln zum Öffnen der Kassette, einem Scanner (6,7) zum Auslesen der gespeicherten Informationen, einer Löscheinheit (4,5) zum Löschen der gespeicherten Informationen, wobei die Löscheinheit (4,5) zwischen Kassettenaufnahme (20) und Scanner (6,7) vorgesehen ist und einer Transporteinrichtung (8,9), um die Speicherfolie (3) von der Kassettenaufnahme (20) durch die Löschheinheit 7(4,5) zu dem Scanner (6,7) Zu transportieren **dadurch gekennzeichnet, dass** Zwischen der Kassettenaufnahme (20) und dem Scanner (6,7) eine Schwenkhare Auflageleiste (10) vorgesehen ist, wobei die Vorderkante der Speicher-folie (3) auf der eingeschwenklen Auflageteiste (10) zu liegen kommen kann, und wobei eine Einrichtung (21-23) Zum seithichen Verschieben der Speicherfolie (3) vergesehen ist, während diese auf der Auflageleiste (10) aufliegt, und wobei die Speicherfolie (3) bei ausgeschweekter Auflageteiste (10) mittels Transporteinrichtung (8,9) zum Scanner (6,7) transportiert werden kann.

2. Vorrichtung nach Anspruch 1, **dadurch gekennzeichnet, dass** die Transporteinrichtung (8,9) je ein Transportwalzenpaar (8 bzw. 9) vor und hinter einem Scanspalt aufweist.

3. Vorrichtung nach Anspruch 2, **dadurch gekennzeichnet, dass** die Auflageleiste (10) zwischen die Transportwalzenpaare (8 bzw. 9) einschwenkbar ist.

4. Vorrichtung nach Anspruchs 2, **dadurch gekennzeichnet, dass** eine Übergabeeinrichtung (12-17) vorgesehen ist, die die Speicherfolie (3) der Kassette (1,2) entnimmt und an das Transportwalzenpaar (8) vor dem Scanspalt übergibt.

5. Vorrichtung nach Anspruch 2, **dadurch gekennzeichnet, dass** die Transportwalzenpaare (8,9) in entgegengesetzte Richtungen mit unterschiedlicher Geschwindigkeit betreibbar sind.

6. Vorrichtung nach Anspruch 1, **dadurch gekennzeichnet, dass** die Transporteinrichtung (8,9) zum Auslesen der Information in eine erste Richtung und zum Löschen der Information in die entgegengesetzte Richtung betreibbar ist.

7. Vorrichtung nach Anspruch 1, **dadurch gekennzeichnet, dass** die Kassettenaufnahme (20) so ausgerichtet ist, dass die Speicherfolie (3) in vertikaler Richtung entnommen werden kann.

8. Vorrichtung nach Anspruch 7, **dadurch gekennzeichnet, dass** Kassettenaufnahme (20), Scanner (6,7) und Löscheinheit (4,5) senkrecht übereinander angeordnet sind.

9. Vorrichtung nach Anspruch 1, **dadurch gekennzeichnet, dass** Kassettenaufnahme (20), Löscheinheit (4,5) und Scanner (6,7) derart angeordnet sind, dass die Speicherfolie (3) ohne Richtungsänderung über die gesamte Transportstrecke von der Kassette (2,3) durch die Löscheinheit (4,5) und den Scanner (6,7) geführt werden kann.

10. Vorrichtung nach Anspruch 1, **dadurch gekennzeichnet, dass** die Kassettenaufnahme (20), die Löscheinheit (4,5) und der Scanner (6,7) derart angeordnet sind, dass der Scanvorgang bereits begonnen werden kann, während sich ein Teil der Speicherfolie (3) noch in der Kassette (1,2) befindet.

## Claims

1. Device for reading out information from storage sheets (3) which are conveyed to a cassette (1, 2) of the device, said device comprising a cassette holder (20), means for opening the cassette, a scanner (6, 7) for reading out the stored information, an erasing device (4, 5) for erasing the stored information, said erasing device (4, 5) being positioned between the cassette holder (20) and the scanner (6, 7), and comprising a transport device (8, 9) for transporting the storage sheet (3) from the cassette holder (20) through the erasing device (4, 5) to the scanner (6, 7), **characterised in that** a pivotable support rail (10) is provided between the cassette holder (20) and the scanner (6, 7), the leading edge of the storage sheet (3) being able to rest on the pivoted-in support rail (10) and a device (21-23) being provided for laterally moving the storage sheet (3) while said sheet (3) is lying on the support rail (10), and said storage sheet (3) being able to be transported to the scanner (6, 7) by means of the transport device (8, 9) when the support rail (10) is pivoted out.

2. Device according to claim 1, **characterised in that** the transport device (8, 9) has a pair of transport rollers (8 and 9) each positioned before and after a scan slit opening.

3. Device according to claim 2, **characterised in that** the support rail (10) may be pivoted inwards between the pairs of transport rollers (8 and 9).

4. Device according to claim 2, **characterised in that** a transfer device (12-17) is provided which removes the storage sheet (3) from the cassette (1, 2) and transfers said sheet (3) to the transport roller pair (8) positioned before the scan slit opening.

5. Device according to claim 2, **characterised in that** the transport roller pairs (8, 9) may be driven in opposite directions at different speeds.

6. Device according to claim 1, **characterised in that** the transport device (8, 9) may be driven in a first direction for reading out the information and in the opposite direction for erasing the information.

7. Device according to claim 1, **characterised in that** the cassette holder (20) is oriented in such a way that the storage sheet (3) may be removed in a vertical direction.

8. Device according to claim 7, **characterised in that** the cassette holder (20), the scanner (6, 7) and the erasing device (4, 5) are positioned vertically one on top of the other.

9. Device according to claim 1, **characterised in that** the cassette holder (20), the erasing device (4, 5) and the scanner (6, 7) are positioned such that the storage sheet (3) may be guided from the cassette (2, 3) through the erasing device (4, 5) and the scanner (6, 7) without changing direction over the complete transport path.

10. Device according to claim 1, **characterised in that** the cassette holder (20), the erasing device (4, 5) and the scanner (6, 7) are positioned such that the scanning of a storage sheet can start while a portion of the storage film (3) is still within the cassette (1, 2).

## Revendications

1. Dispositif destiné à la lecture d'informations à partir de films d'enregistrement (3), qui sont amenés au dispositif dans une cassette (1, 2), comportant un porte-cassette (20), des moyens pour ouvrir la cassette, un scanneur (6, 7) pour la lecture des informations mémorisées, une unité d'effacement (4, 5) pour l'effacement des informations mémorisées, l'unité d'effacement (4, 5) étant prévue entre le porte-cassette (20) et le scanneur (6, 7), et un dispositif de transport (8, 9) pour transporter le film d'enregistrement (3) à partir du porte-cassette (20) à travers l'unité d'effacement (4, 5) vers le scanneur (6, 7), **caractérisé en ce qu'**une barre d'appui (10) pivotante est prévue entre le porte-cassette (20) et le scanneur (6, 7), le bord avant du film d'enregistrement (3) pouvant se positionner sur la barre d'appui (10) pivotée, et **en ce qu'**il est prévu un dispositif (21 à 23) pour le décalage latéral du film d'enregistrement (3) pendant que celui-ci est positionné sur la barre d'appui (10), le film d'enregistrement (3) pouvant être amené au scanneur (6, 7) au moyen du dispositif de transport (8, 9) à l'état pivoté de la barre d'appui (10).

2. Dispositif selon la revendication 1, **caractérisé en ce que** le dispositif de transport (8, 9) comporte un couple de galets de transport (8 ou 9) respectivement en amont et en aval d'une fente de scannage.

3. Dispositif selon la revendication 2, **caractérisé en ce que** la barre d'appui (10) peut être pivotée entre les couples de galets de transport (8 ou 9).

4. Dispositif selon la revendication 2, **caractérisé en ce qu'**il est prévu un dispositif de transfert (12 à 17), qui prélève le film d'enregistrement (3) de la cassette (1, 2) et le transfère au couple de galets de transport (8) situé en amont de la fente de scannage.

5. Dispositif selon la revendication 2, **caractérisé en ce que** les couples de galets de transport (8, 9) peuvent fonctionner à différentes vitesses dans des sens opposés.

6. Dispositif selon la revendication 1, **caractérisé en ce que** le dispositif de transport (8, 9) peut fonctionner dans un premier sens pour la lecture de l'information, et dans le sens opposé pour l'effacement de l'information.

7. Dispositif selon la revendication 1, **caractérisé en ce que** le porte-cassette (20) est orienté de telle sorte que le film d'enregistrement (3) puisse être prélevé dans la direction verticale.

8. Dispositif selon la revendication 7, **caractérisé en ce que** le porte-cassette (20), le scanneur (6, 7) et l'unité d'effacement (4, 5) sont disposés en étant superposés verticalement.

9. Dispositif selon la revendication 1, **caractérisé en ce que** le porte-cassette (20), l'unité d'effacement (4, 5) et le scanneur (6, 7) sont disposés de telle sorte que, sur l'ensemble du trajet de transport, le film d'enregistrement (3) puisse être transporté sans changement de direction de la cassette (2, 3) à travers l'unité d'effacement (4, 5) et à travers le scanneur (6, 7).

10. Dispositif selon la revendication 1, **caractérisé en ce que** le porte-cassette (20), l'unité d'effacement (4, 5) et le scanneur (6, 7) sont disposés de telle sorte que le processus de scannage puisse déjà commencer alors qu'une partie du film d'enregistrement (3) se trouve encore dans la cassette (1, 2).
